# DEMANDE DE BREVET EUROPEEN

(11) **EP 3 489 209 A1**
(43) Date de publication de la demande: **29.05.2019**
(21) Numéro de dépôt: 18171475.9
(22) Date de dépôt: 09.05.2018
(51) Int. Cl.: C04B 41/70, E04C 2/26, A62C 2/06, A62C 3/02, B32B 5/02, B32B 7/12, B32B 15/10, B32B 15/20, B32B 21/04, B32B 21/08, B32B 21/10, B32B 21/13, B32B 21/14, B32B 15/14, B32B 27/12, C04B 111/28

(54) **PANNEAU EN BOIS COMPOSITE A HAUTE RESISTANCE THERMIQUE ET MECANIQUE**

(30) Priorité: 24.11.2017 EP 17203674
(71) Demandeur: Davoudi, Farhooman, 77680 Roissy En Brie (FR)
(72) Inventeur: Davoudi, Farhooman, 77680 Roissy En Brie (FR)
(74) Mandataire: Argyma

(57) **Abrégé**

La présente invention a pour objet un panneau en bois composite stratifié (100), comprenant une pluralité de lamelles (10, 11) de placage de bois collées entre elles et, apposée sur au moins l'une desdites lamelles (10, 11) de placage de bois, une couche (12) d'un enduit de protection thermique comprenant une base de colle ou de mastic réfractaire, comprenant au moins un élément minéral réfractaire, ledit enduit de protection thermique intégrant une quantité de microcapsules contenant de l'eau ou de cristaux saturés d'eau.

## Description

### DOMAINE TECHNIQUE ET OBJET DE L'INVENTION

L'invention concerne le domaine de la protection thermique de panneaux en bois composite structurel. Plus précisément, la présente invention vise un panneau en bois composite comprenant un enduit de protection thermique, formant une barrière thermique.

### ETAT DE LA TECHNIQUE

Les panneaux en bois composite sont couramment utilisés en construction et sont appréciés pour leur bonne résistance mécanique. On connaît en particulier le matériau désigné lamibois, défini dans la norme Afnor NF EN 14279 et également désigné LVL pour Laminated Veneer Lumber en anglais.

Dans la suite, ce type de panneau en lamibois ou en matériau similaire à base de bois composite est désigné panneau LVL.

Les panneaux LVL, comme cela est connu, sont ainsi formés d'un matériau composite à base de bois, constitué d'une pluralité de lamelles de placage de bois. Les fibres des différentes lamelles de placage de bois sont orientées principalement de façon parallèle. Les différentes lamelles de placage sont collées entre elles, de préférence avec des liants organiques résistants à l'eau, et l'ensemble est ensuite cuit tout en étant pressé.

L'inconvénient des panneaux LVL connus réside principalement dans leur faible résistance thermique. Les panneaux LVL de l'état de l'art sont ainsi inaptes à assurer une fonction de bouclier thermique. Lorsqu'un panneau LVL connu est exposé à un incendie, il n'empêche pas la chaleur de se diffuser de l'autre côté du panneau par rapport à la flamme. En cas d'incendie notamment, ou de présence d'une source de chaleur intense quelconque d'un côté du panneau, la chaleur est transmise d'une lamelle de placage de bois à l'autre, jusqu'à l'autre côté du panneau, permettant une propagation de l'incendie éventuel.

En outre, les panneaux LVL connus ont tendance à brûler en formant des braises, ce qui favorise les reprises de feu, et perdent rapidement leurs propriétés de tenue mécanique. En effet, dans l'état de la technique, même en utilisant des colles dites réfractaires pour coller entre elles les lamelles de placage de bois, en cas d'incendie, la tenue mécanique des panneaux LVL est fortement dégradée.

Pour améliorer la tenue thermique des panneaux LVL, dans l'état de l'art, il est connu de recourir à des traitements chimiques. Cependant, d'une part, on n'obtient pas de tenue thermique suffisante pour résister à un incendie pendant une durée significativement augmentée et, d'autre part, on recourt à des traitements présentant une toxicité élevée.

L'objectif de la présente invention est par conséquent d'augmenter la résistance mécanique de tels panneaux LVL et surtout d'augmenter très significativement leur résistance thermique.

Les panneaux LVL à haute résistance thermique et mécanique ainsi produits pourront être utilisés dans tout domaine technique, et notamment servir à constituer des portes coupe-feu.

Dans ce but, pour améliorer leur fonction de barrière thermique, et donc de barrière anti-feu, la présente invention propose des panneaux en bois composite comprenant une couche d'enduit minéral retardateur thermique, adapté pour conférer au panneau une fonction de bouclier thermique. De préférence, l'enduit est apposé sur une feuille en fibre réfractaire, par exemple en fibre de verre ou en fibre de basalte ou en fibre de carbone ou en kevlar.

Pour cela, on fabrique un enduit à appliquer sur lesdits panneaux en bois composite, dont l'épaisseur et la composition sont adaptables à un objectif de résistance thermique particulier.

L'enduit visé consiste ainsi en un enduit de protection thermique, comprenant une base de colle ou de mastic comprenant au moins un élément minéral réfractaire, ledit enduit intégrant par ailleurs une certaine quantité de cristaux, ou de microcapsules, renfermant un liquide, en particulier de l'eau.

Lesdits cristaux ou lesdites microcapsules fixent de l'eau au niveau de la surface enduite. Sous l'effet d'une forte chaleur, due par exemple à un incendie, lesdits cristaux ou lesdites microcapsules sont configurés pour libérer l'eau, progressivement.

Tant qu'il y a de l'eau dans l'enduit, la température du côté non exposé à la source de forte chaleur se stabilise, typiquement à une température inférieure à 100 °C, pendant une durée pouvant atteindre et dépasser plusieurs dizaines de minutes en fonction de l'épaisseur de la couche d'enduit apposée et de la proportion de cristaux ou de microcapsules diluée dans ledit enduit.

### PRESENTATION GENERALE DE L'INVENTION

Plus précisément, l'invention a pour objet un panneau en bois composite stratifié, comprenant une pluralité de lamelles de placage de bois collées entre elles et, apposée sur au moins l'une desdites lamelles de placage de bois, une couche d'un enduit de protection thermique comprenant une base de colle ou de mastic réfractaire, comprenant au moins un élément minéral réfractaire, ledit enduit de protection thermique intégrant une quantité de microcapsules contenant de l'eau ou de cristaux saturés d'eau.

Grâce à l'invention, en cas d'incendie dans une pièce séparée d'une autre pièce par un tel panneau en bois composite, ledit panneau, d'une part, présente une bonne tenue mécanique pendant une durée étendue et, d'autre part, il agit comme une barrière thermique évitant l'élévation rapide de la température dans la pièce adjacente et empêche de ce fait la propagation du feu.

Selon un mode de réalisation, le panneau en bois composite stratifié comprend, de part et d'autre de la pluralité de lamelles de placage de bois, apposée sur une face externe d'une lamelle de placage de bois de ladite pluralité de lamelles de placage de bois, respectivement, une couche d'enduit de protection thermique.

Selon un mode de réalisation, le panneau en bois composite stratifié comprend au moins une feuille de fibres réfractaires, notamment en fibre de verre ou en fibre de basalte ou en fibre de carbone ou en kevlar®, disposée sur ladite au moins une lamelle de placage de bois sur laquelle est apposée la couche d'enduit, ledit enduit recouvrant ladite feuille de fibres réfractaires.

Avantageusement, l'enduit comprend un mélange de cristaux de chlorure de sodium saturés d'eau et de carbonate de sodium saturés d'eau.

Avantageusement, l'enduit comprend entre 10% et 30% en masse d'un mélange comprenant 50% en masse de cristaux de chlorure de sodium saturés d'eau et 50% en masse de cristaux de bicarbonate de sodium saturés d'eau.

Selon un mode de réalisation, le panneau en bois composite stratifié comprend une plaque d'extrémité de décoration, notamment en bois, en plastique ou en aluminium, pour recouvrir l'enduit apposé sur ladite au moins une lamelle de placage de bois.

Selon un mode de réalisation, le panneau en bois composite stratifié comprend une succession d'au moins deux lamelles de placage de bois comprenant chacune une feuille de fibres réfractaires recouverte d'une couche d'enduit de protection thermique.

Avantageusement, l'enduit comprend de la vermiculite en poudre.

Selon un mode de réalisation, l'enduit comprend des billes de polystyrène expansées incorporées ou des bulles de gaz injectées, le gaz pouvant par exemple de l'air ou du CO₂.

L'intégration de billes de polystyrène ou de bulles de gaz dans l'enduit permet d'augmenter le volume de l'enduit et améliore la capacité du panneau comprenant l'enduit à assurer une fonction d'isolation phonique.

Avantageusement, l'enduit de protection thermique comprend des fibres en laine de roche et/ou en laine de verre incorporées, de préférence de façon à ce que lesdites fibres en laine de roche et/ou en laine de verre représentent 5% à 20% en masse de l'enduit de protection thermique.

La présente invention concerne aussi une porte comprenant un encadrement et deux panneaux en bois composite stratifié tel que brièvement décrit ci-dessus, fixés audit encadrement.

Ledit encadrement est choisi dans un matériau qui n'est pas conducteur thermique.

Selon un mode de réalisation, ladite porte comprend des rivets et/ou des vis pour fixer chaque panneau en bois composite stratifié à l'encadrement. En particulier, lesdits rivets et/ou lesdites vis peuvent être en basalte.

La présente invention concerne également un ensemble d'un profilé d'encadrement et d'une telle porte, ledit profilé comprenant une pluralité de cavités emplies de l'enduit de protection thermique, de sorte que, sous l'effet de chaleur due à un incendie, l'enduit gonfle et comble au moins en partie un espace libre entre ladite porte et ledit profilé d'encadrement.

L'invention vise en outre un procédé de fabrication d'un panneau en bois composite stratifié tel que brièvement décrit ci-dessus, comprenant le collage entre elles de lamelles de placage de bois pour former un panneau, le collage d'une feuille de fibres réfractaires sur l'une au moins desdites lamelles de placage de bois, et le dépôt d'une couche d'enduit de protection thermique sur ladite au moins une feuille de fibres réfractaires.

Selon un mode de réalisation, le procédé comprend le dépôt d'une couche de primaire préalable au dépôt de la couche d'enduit de protection thermique.

### DESCRIPTION DES FIGURES

L'invention sera mieux comprise à la lecture de la description qui va suivre, donnée uniquement à titre d'exemple, et se référant aux dessins annexés sur lesquels :
- la figure 1 montre une vue d'un panneau en bois composite selon l'invention comprenant, de part et d'autre, une couche d'enduit de protection thermique et une feuille de fibres réfractaires,
- la figure 2 montre une porte comprenant deux panneaux en bois composite selon l'invention,
- la figure 3 montre un panneau en bois composite selon l'invention.

### DESCRIPTION DETAILLEE DE L'INVENTION

L'invention est présentée principalement pour une application dans le domaine des panneaux LVL, notamment pour former des portes coupe-feu. Cependant, d'autres applications sont visées par la présente invention. En particulier, l'invention couvre tout panneau en bois composite stratifié conforme à ladite invention.

En premier lieu, il est précisé que la présente invention comprend l'utilisation d'un enduit minéral réfractaire, désigné enduit de protection thermique ou éventuellement, lorsqu'il comprend de la colle, enduit de collage et de protection thermique, assurant principalement une fonction de bouclier thermique.

### Enduit de protection thermique :

Ledit enduit comprend une base de colle ou de mastic dit réfractaire, comprenant au moins un élément minéral réfractaire, et configuré pour ne pas brûler jusqu'à de hautes températures, telles que des températures allant de 800 °C à 1500 °C. On peut par exemple utiliser une telle colle réfractaire de marque Rubson® ou un mastic réfractaire de marque Ayrton®.

Ces colles et mastics réfractaires ont généralement une base de silicate de soude.

Des cristaux ou des microcapsules renfermant du liquide, en particulier de l'eau, sont intégrés à cette base de colle ou de mastic réfractaire.

En particulier, on dilue dans de l'eau, jusqu'à saturation, un mélange à 50/50 en poids de cristaux de chlorure de sodium (NACl) et de bicarbonate de sodium (NaHCO₃).

Eventuellement, un seul de ces deux cristaux ou un mélange dans des proportions différentes de ces cristaux ou encore d'autres cristaux peuvent également être utilisés.

Autrement dit, l'enduit de protection thermique est obtenu à partir d'une dilution s'écrivant :

(NaHCO₃ + H₂O) + (NaCl) + H₂O).

Pour obtenir l'enduit de protection thermique, les cristaux saturés d'eau sont ensuite intégrés à la base de colle ou de mastic réfractaire.

De préférence, on intègre 10% à 30% en poids de cristaux saturés d'eau dans la base de colle ou de mastic réfractaire.

Les cristaux intégrés à la base de colle ou de mastic réfractaire fixent de l'eau dans l'enduit ainsi obtenu, qui peut être appliqué sur une ou plusieurs lamelles de placage de bois d'un panneau LVL.

Cette eau est libérée progressivement en cas d'élévation de la température, par exemple à cause d'un incendie. L'eau ainsi libérée améliore la capacité du produit à agir comme un bouclier thermique.

Pour minimiser la porosité de l'enduit, ainsi que pour augmenter sa tenue mécanique, des fibres en matériaux réfractaires, tels que des matériaux minéraux réfractaires ou des fibres en céramique réfractaires, peuvent être intégrées à l'enduit.

Par exemple, des fibres en laine de roche ou en laine de verre ou en fibres de carbone ou en fibres de basalte ou en kevlar® peuvent être, selon un mode de réalisation, mélangées à l'enduit pour l'enrichir et le renforcer.

La teneur en fibres en matériaux minéraux réfractaires peut être adaptée en fonction des objectifs poursuivis.

De préférence, pour réaliser l'enduit de protection thermique, on dilue environ 10% en masse de cristaux saturés d'eau dans la base de colle ou de mastic réfractaire.

Selon un mode de réalisation préféré, l'enduit de protection thermique comprend par ailleurs de la poudre de vermiculite incorporée.

Selon un mode de réalisation, l'enduit étant expansé par injection de bulles de gaz, le gaz pouvant par exemple de l'air ou du CO₂.

Selon un mode de réalisation, l'enduit comprend par ailleurs des billes de polystyrène expansé incorporées.

La vermiculite est un minéral naturel de formule chimique (Mg,Ca)_{0,7}(Mg,Fe,Al)₆(Al,Si)₈O₂₂(OH)₄.8H₂O. La vermiculite ainsi incorporée dans l'enduit de protection thermique assure une fonction complémentaire de réservoir d'eau, ladite eau étant libéré en cas de forte chaleur due à un incendie.

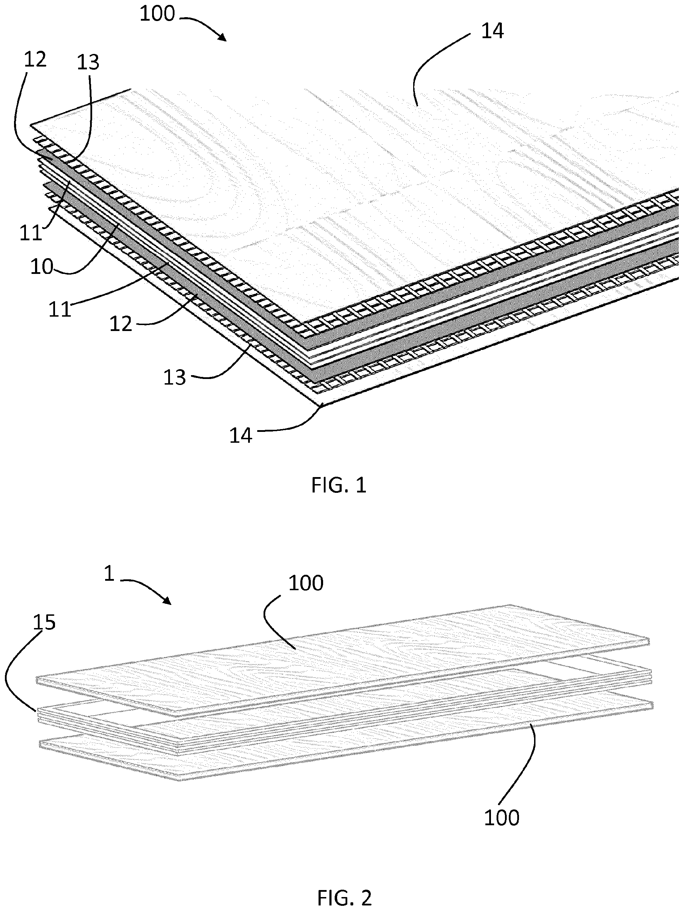

L'enduit de protection thermique est appliqué sur une ou plusieurs lamelles de placage de bois d'un panneau LVL. En référence à la figure 1, l'invention concerne ainsi un panneau LVL comprenant, au coeur, une pluralité de lamelles 10, 11 de placage de bois collées entre elles.

Au moins d'un côté, ou de part et d'autre comme représentées sur les figures, on prévoit de disposer, sur une lamelle de placage de bois 11, une feuille de fibres réfractaires 13. Notamment, cette feuille 13 est constituée de fibres de verre ou de fibre de basalte ou de fibres de carbone ou de kevlar®. Sur la feuille de fibres réfractaires 13, ou directement sur la lamelle de placage de placage de bois dans le cas où il n'y a pas de feuille de fibres réfractaires, une couche 12 d'enduit de protection thermique est apposée.

Selon le cas, une couche de primaire est prévue avant d'apposer la couche d'enduit 12. En particulier, dans le cas où une feuille 13 en fibres de carbone est disposée sur la lamelle de placage de bois 11 à recouvrir d'enduit, on prévoit de préférence le dépôt d'une couche de primaire réfractaire avant d'apposer l'enduit de protection thermique.

Un primaire réfractaire spécifique peut ainsi être mis au point, sur une base de primaire universel, à laquelle peut être intégrée, comme pour l'enduit de protection thermique, un mélange de cristaux de chlorure de sodium et de bicarbonate de sodium saturés d'eau, à 50/50 en masse. Comme pour l'enduit, d'autres cristaux ou d'autres proportions peuvent également être utilisés.

De préférence, dans le primaire, on intègre 1% à 5% en masse de cristaux saturés d'eau.

### Fonction de bouclier thermique :

D'un point de vue physique, les phénomènes mis en oeuvre pour améliorer la capacité d'un panneau LVL, comprenant une ou plusieurs couches d'enduit de protection thermique, à assurer une fonction de bouclier thermique, sont décrits ci-après.

Comme décrit précédemment, l'enduit de protection thermique est obtenu par la dilution, dans une base de colle ou de mastic réfractaire, de cristaux ou de microcapsules emprisonnant un liquide, par exemple de l'eau.

Selon un mode de réalisation préféré, pour former l'enduit de protection thermique, un mélange de cristaux de chlorure de sodium et de bicarbonate de sodium saturés d'eau est ainsi incorporé à ladite base de colle ou de mastic réfractaire.

Après avoir été introduits dans de l'eau jusqu'à saturation, ces cristaux, en séchant, emprisonne l'eau et la fixe dans l'enduit.

Le bicarbonate de sodium présente une température de fusion à 270°C ; il se décompose à partir de 50°C en relâchant de la vapeur eau et du CO₂ gazeux.

De ce fait, lorsque le panneau LVL comprenant une ou plusieurs couches d'enduit de protection thermique est soumis à une intense source de chaleur, par exemple à cause d'un incendie, les cristaux de bicarbonate de sodium libèrent l'eau qu'ils contiennent et se décomposent en libérant de la vapeur d'eau et du CO₂ gazeux. Les cristaux de chlorure de sodium libèrent également l'eau qu'ils emprisonnaient.

La vermiculite en poudre, si l'enduit de protection thermique en contient, libère également progressivement l'eau qu'elle contient.

Il se crée par conséquent dans l'enduit, qui gonfle, des cavités emplies de vapeur d'eau et de CO₂ gazeux. Ces cavités emplies de vapeur d'eau et de CO₂ forment une barrière thermique efficace.

L'eau qui avait été intégrée, via les cristaux, dans l'enduit, est progressivement consommée, évaporée, et la température augmente plus rapidement lorsqu'il n'y a plus d'eau dans le panneau LVL.

Il est à noter que la chaleur ne se diffuse pas du côté opposé au côté chauffé, soumis à la flamme, mais la chaleur ne se diffuse pas non plus, sur le panneau LVL, du côté chauffé. Ainsi, la température en des points du côté exposé à la source de chaleur éloignés du point normal à ladite source de chaleur voient leur température rester significativement inférieure à celle dudit point normal.

Ainsi, l'enduit selon l'invention forme une barrière efficace aux infrarouges, et donc une barrière de protection thermique efficace, aussi bien vis-à-vis de très hautes températures que vis-à-vis de très basses températures.

### Panneau LVL selon l'invention :

La figure 1 montre une vue éclatée partielle d'un panneau en bois composite selon l'invention.

En référence à la figure 1, sur une base de panneau en lamibois constitué d'une pluralité de lamelles 10, 11 de placage de bois, on applique, sur une face d'au moins l'une desdites lamelles, par exemple sur une lamelle d'extrémité 11, ou sur chaque lamelle d'extrémité 11, une couche d'enduit de protection thermique 12 et, de préférence, une feuille de fibres réfractaires 13.

Chaque lamelle de placage de bois 10 présente une épaisseur typique de 2 mm à 2,5 mm. Un panneau en bois composite 100 assemblé présente une épaisseur typique comprise entre 5 mm et 30 mm.

L'enduit de protection thermique 12 comprend alors de la colle réfractaire et assure également le collage de la feuille de fibres réfractaires 13. Ladite feuille de fibres réfractaires 13 est notamment constituée de fibres de verre ou de fibres de basaltes ou de fibres de carbone ou de kevlar®. Cette feuille de fibres réfractaires permet d'améliorer la résistance mécanique du panneau en bois composite 100.

On applique ensuite, optionnellement, une plaque externe de décoration 14 recouvrant la couche d'enduit 12 et la feuille de fibres réfractaires 13 et assurant une fonction décorative. La plaque externe de décoration 14 peut être un placage de bois par exemple, présentant une épaisseur typique de l'ordre de 2 mm, ou encore une lamelle stratifiée en plastique, présentant une épaisseur typique de l'ordre de 1 mm, voire inférieure à 1 mm.

On peut également coller d'abord une feuille de fibres réfractaires 13 sur une lamelle de placage de bois 10, 11, puis la recouvrir d'une couche d'enduit de protection thermique 12.

Le cas échéant, on applique préalablement au dépôt de d'enduit une couche de primaire réfractaire, par exemple élaboré selon la méthode brièvement décrite ci-dessus. La couche de primaire présente de préférence une épaisseur de quelques microns. Le dépôt de cette couche de primaire est optionnel.

Sur cette couche de primaire réfractaire, ou directement sur la lamelle de placage de bois 11 ou directement sur la feuille de fibres réfractaires 13, on applique la couche 12 d'enduit de protection thermique tel que décrit précédemment.

La couche de primaire présente une épaisseur inférieure à 1 mm, typiquement de quelques microns. La couche d'enduit 12 présente de préférence une épaisseur comprise entre 2 mm et 10 mm, notamment entre 3 mm et 5 mm.

En pratique, l'épaisseur de la couche d'enduit 12, de même que sa teneur en cristaux saturés d'eau, sont adaptables et configurés pour atteindre un objectif de capacité donnée à assurer une fonction de bouclier thermique.

Toujours en référence à la figure 1, qui montre un panneau en bois composite 100 comprenant une pluralité de lamelles de placage de bois 10, 11 collées entre elles, les lamelles d'extrémité 11 étant recouvertes d'une couche d'enduit 12, il est également représenté, conformément à un mode de réalisation, une couche de fibres réfractaires 13 assurant une fonction de renfort mécanique.

Pour renforcer davantage les performances mécaniques et thermiques su panneau LVL selon l'invention, plusieurs feuilles de fibres réfractaires 13 recouvertes d'une couche 12 d'enduit de protection thermique peuvent être incorporées respectivement entre des lamelles de placage de bois 10, 11.

De préférence, en référence à la figure 2, il est notamment prévu l'utilisation de panneaux 100 en bois composite, tels que décrits précédemment en regard de la figure 1, pour réaliser des portes 1, notamment des portes coupe-feu.

Dans ce cas, selon un mode de réalisation, des rivets et/ou des vis (non représentés) sont prévus pour fixer les panneaux LVL 100 à l'encadrement 15 de la porte 1. L'encadrement 15 comprend par exemple des rainures permettant l'insertion des panneaux LVL 100 dans ledit encadrement 15. Les rivets et/ou les vis fixant les panneaux LVL 100 à l'encadrement 15 permettent en particulier de maintenir la structure mécanique de la porte 1 en cas d'incendie. Ces rivets et/ou ces vis, de préférence en basalte, traverse la plaque externe de décoration 14, la couche d'enduit 12, le feuille de fibres réfractaires 13 et les lamelles 10, 11 de placage de bois pour fixer le panneau LVL 100 à l'encadrement 15.

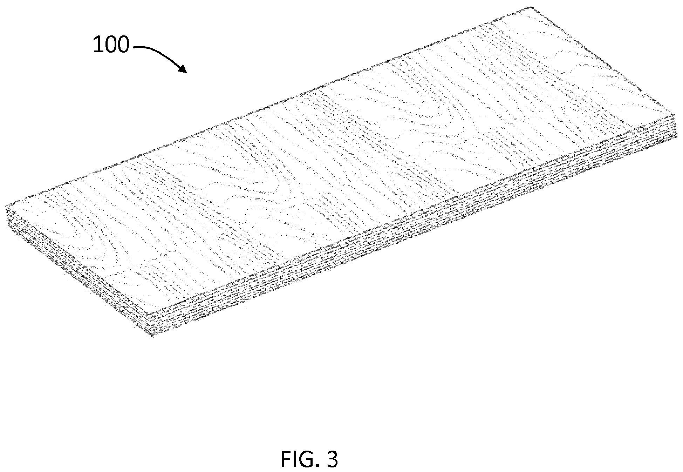

La figure 3 montre un panneau LVL 100 assemblé, conforme à l'invention.

Il est précisé que des tests ont été effectués et ont montré les qualités de résistance et la capacité à assurer une fonction de bouclier thermique de la part de panneaux en bois composite selon l'invention.

Ainsi, sur un panneau LVL de 5 mm d'épaisseur, on a déposé une feuille de fibres de verre recouverte d'une couche de 2 mm d'enduit de collage et de protection thermique, conformément à l'invention.

On a soumis à une flamme à 1000 °C la face traitée de ce panneau LVL pendant 30 minutes. On a mesuré la température sur le panneau LVL du côté opposé au côté soumis à la flamme ; la température de ce côté opposé est restée inférieure à 30 °C en tout point éloigné d'au moins 10 cm du point normal au point soumis à la flamme.

Après un temps long, supérieur à 30 à 60 minutes selon l'épaisseur du panneau LVL, la température du côté opposé à la flamme, à la normale du point soumis à la flamme, n'a pas dépassé 290 °C, température à laquelle le bois du panneau LVL se transforme en graphite sans faire de braise, ce qui permet d'éviter des reprises de feu.

Deux panneaux LVL selon l'invention, assemblés sur un encadrement de porte pour former une porte coupe-feu, empêche ainsi toute traversée de flamme pendant plus d'une heure.

Il est précisé que la présente invention est susceptible d'adaptations à la portée de l'homme de l'art. Une utilisation de l'invention est notamment prévue pour la réalisation de porte coupe-feu, sans que cette utilisation ne puisse être interprétée de façon limitative.

Selon un mode de réalisation particulier de l'invention (non représenté), il est prévu la réalisation de profilés d'encadrement de porte destinés à coopérer avec une porte constituée d'un panneau en bois composite selon l'invention.

Lesdits profilés comprennent des cavités emplies d'enduit de protection thermique. Sous l'effet de la chaleur produite par un incendie par exemple, ledit enduit gonfle et bouche l'interstice situé entre ladite porte et ledit profilé d'encadrement, bloquant de ce fait le passage de la chaleur d'un côté de la porte vers l'autre côté.

## Revendications

1. Panneau en bois composite stratifié (100), comprenant une pluralité de lamelles (10, 11) de placage de bois collées entre elles et, apposée sur au moins l'une (11) desdites lamelles de placage de bois, une couche (12) d'un enduit de protection thermique comprenant une base de colle ou de mastic réfractaire, comprenant au moins un élément minéral réfractaire, ledit enduit de protection thermique intégrant une quantité de microcapsules contenant de l'eau ou de cristaux saturés d'eau.

2. Panneau en bois composite stratifié (100) selon la revendication 1, comprenant, de part et d'autre de la pluralité de lamelles (10, 11) de placage de bois, apposée sur une face externe d'une lamelle de placage de bois de ladite pluralité de lamelles (10, 11) de placage de bois, respectivement, une couche (12) d'enduit de protection thermique.

3. Panneau en bois composite stratifié (100) selon l'une des revendications précédentes, comprenant au moins une feuille de fibres réfractaires (13), notamment en fibre de verre ou en fibre de basalte ou en fibre de carbone ou en kevlar®, disposée sur ladite au moins une lamelle (10, 11) de placage bois sur laquelle est apposée la couche d'enduit, ledit enduit recouvrant ladite feuille de fibres réfractaires (13).

4. Panneau en bois composite stratifié (100) selon l'une des revendications précédentes, dans lequel l'enduit comprend un mélange de cristaux de chlorure de sodium saturés d'eau et de carbonate de sodium saturés d'eau.

5. Panneau en bois composite stratifié (100) selon l'une des revendications précédentes, dans lequel l'enduit comprend entre 10% et 30% en masse d'un mélange comprenant 50% en masse de cristaux de chlorure de sodium saturés d'eau et 50% en masse de cristaux de bicarbonate de sodium saturés d'eau.

6. Panneau en bois composite stratifié (100) selon l'une des revendications précédentes, comprenant une plaque d'extrémité de décoration (14), notamment en bois, en plastique ou en aluminium, pour recouvrir l'enduit apposé sur au moins une lamelle de placage de bois (10, 11).

7. Panneau en bois composite stratifié (100) selon l'une des revendications précédentes, comprenant une succession d'au moins deux lamelles (10, 11) de placage de bois comprenant chacune une feuille de fibres réfractaires (13) recouverte d'une couche (12) d'enduit de protection thermique.

8. Panneau en bois composite stratifié (100) selon l'une des revendications précédentes, dans lequel l'enduit comprend de la vermiculite en poudre.

9. Panneau en bois composite stratifié (100) selon l'une des revendications précédentes, dans lequel l'enduit comprend des billes de polystyrène expansées incorporées ou des bulles de gaz injectées, le gaz pouvant par exemple de l'air ou du CO₂.

10. Panneau en bois composite stratifié (100) selon l'une des revendications précédentes, dans lequel l'enduit de protection thermique comprend des fibres en laine de roche et/ou en laine de verre incorporées, de préférence de façon à ce que lesdites fibres en laine de roche et/ou en laine de verre représentent 5% à 20% en masse de l'enduit de protection thermique.

11. Porte comprenant un encadrement (15) et deux panneaux en bois composite stratifié (100) selon l'une des revendications précédentes, fixés audit encadrement.

12. Porte selon la revendication précédente, comprenant des rivets et/ou des vis en basalte pour fixer chaque panneau en bois composite stratifié (100) à l'encadrement (15).

13. Ensemble d'un profilé d'encadrement et d'une porte selon l'une des revendications 11 à 12, ledit profilé comprenant une pluralité de cavités emplies de l'enduit de protection thermique, de sorte que, sous l'effet de chaleur due à un incendie, l'enduit gonfle et comble au moins en partie un espace libre entre ladite porte et ledit profilé d'encadrement.

14. Procédé de fabrication d'un panneau en bois composite stratifié (100) selon l'une des revendications 1 à 10, comprenant le collage entre elles de lamelles (10, 11) de placage de bois pour former un panneau, le collage d'une feuille de fibres réfractaires (13) sur l'une au moins desdites lamelles (10, 11) de placage de bois, et le dépôt d'une couche (12) d'enduit de protection thermique sur ladite au moins une feuille de fibres réfractaires (13).

15. Procédé selon la revendication précédente, comprenant le dépôt d'une couche de primaire préalable au dépôt de la couche (12) d'enduit de protection thermique.
